Europäisches Patentamt

(19) European Patent Office

Office européen des brevets

(11) Publication number: **0 258 171**
A2

## (12) EUROPEAN PATENT APPLICATION

(21) Application number: 87630154.0

(22) Date of filing: 28.08.87

(51) Int. Cl.⁴: **B 28 B 1/52**
B 28 B 13/02, B 28 B 3/02,
B 28 B 1/08

(30) Priority: 29.08.86 AU 7778/86

(43) Date of publication of application:
02.03.88 Bulletin 88/09

(84) Designated Contracting States:
AT BE CH DE ES FR GB GR IT LI LU NL SE

(71) Applicant: ALPERIN TECHNICAL PTY.LTD
P.O. Box 432
Malvern Victoria 3144 (AU)

(72) Inventor: Alperin, Jorge
3/35 Tintern Avenue
Toorak Victoria 3142 (AU)

(74) Representative: Bleyer, Jean et al
OFFICE DENNEMEYER S.à.r.l. P.O. Box 1502
L-1015 Luxembourg (LU)

(54) Composite article and method and apparatus for producing same.

(57) A composite article is produced from fibres (18) and solid constituents, (10,12) one of which is cement (10). The fibres (18) and solid constituents (10, 12) are pre-mixed (16), and deposited on a form (56) with the fibres (18) being randomly oriented. The pre-mixture is wetted by a fluid (72) which is capable of reacting with the cement (10), and the wetted pre-mixture is then subjected to vibration energy (82) whilst being held under pressure (100), to mix the fluid (72), fibres (18) and solid constituents (10, 12) and to facilitate the reaction of the fluid with the cement.

_Fig. 1_

## Description

This invention relates to a composite article, that is, an article produced from a composite material, and to a method and an apparatus for producing such an article.

Composite materials are mixtures of two or more phases. All such composite materials have strength, rigidity, toughness, heat and fire-resistance or a combination of such desirable properties which is superior to the corresponding properties of the individual components or phase.

Many composite materails can be adequately described as a homogeneous isotropic continuous phase called a matrix, in which particles of a second homogeneous isotropic phase, called a discrete phase, are dispersed.

When the discrete phase is a material in the form of fibres the composite material is termed a fibre reinforced composite.

In composite materials, the matrix serves several functions:

(a) it protects the surface of the fibres against brittle fracture

(b) it transfers the longitudinal load between fibres by virtue of its shear strength and its adhesion to the fibres

(c) it deflects cracks which may occur in fibres in a longitudinal direction and transfers the resulting load increase over appreciable lengths.

Fibre reinforced composites are commonly classified in two main groups according to the characteristics of the matrix and the fibres.

(a) Brittle fibres in a ductile matrix

(b)(i) Ductile fibres in a brittle matrix

(ii) Brittle fibres in a brittle matrix

Ductile or brittle fibres in a brittle matrix are technically the least efficient combination, but brittle fibres in brittle matrices are common, cheap, popular and world wide available materials.

Fibre-reinforced cement products belong to this group of brittle matrix and brittle or ductile fibres. The present invention relates in particular to the production of reinforced composite materials, in particular to fibre reinforced cement articles such as sheets for use in building. The invention contemplates the production of fibre-reinforced cement articles.

Before referring to the invention reference will be made to the characteristics of cement matrices.

In this specification, the term 'cement' denotes any kind of organic or inorganic adhesive material. It may be used as a binder of bulky materials (aggregates), platelets (laminar materials) or elongate materials (fibres).

An hydraulic cement hardens by reaction with water and results in a water-resistant product.

Portland cement is an inorganic hydraulic cement which hardens by reacting with water to produce a water-resistant product. In Portland cement matrices cured at normal temperatures, the strength thereof is due almost entirely to the presence of a gel, termed tobermorite. In addition to the crystalline, colloidal character of the gel, other factors such as the specific surface area of the cement paste, the paste porosity (expressed commonly by the water-cement ratio), and the temperature and availability of moisture during curing, appear to be relevant to the strength development of the matrix.

The use of Portland cement matrices as binders in concrete or mortar with a ratio of binder to aggregates of more than 1:3 produces excellent results. However, known fibre-reinforced cement composites do not fall into that range, and consequently there is a limitation on the manufacture of such products, for the following reasons:-

(a) They have an intrinsically discontinuous nature because of pores and voids in the matrix, resulting in a material with a low bonding factor.

(b) The have a relatively high elastic modulus.

(c) They have a low tensile failure strain.

(d) They have very low impact directional tension and bending strength values.

(e) They are highly alkaline, and will remain so throughout their life.

(f) Their behaviour is very dependent on moisture content and changes therein will result in substantial shrinkage strain before any external force is applied.

(g) Their workability in a wet state limits the packing factor (that is, the volumetric ratio of fibre to matrix). Working of the matric (such as in mixing) requires a high consumption of energy and produces considerable damage to some fibres.

To improve the general performance of Portland cement matrices, two known techniques are useful. One is the impregnation of voids and microcracks with ductile materials such as polymers. The other is the use of fibres as reinforcements. Both techniques offer some improvements in the strain range and may be used individually or together in the production of products.

Polymer modified Portland cement matrices have a reduced modulus of elasticity, the apparent porosity percentage by volume and the water absorption percentage by weight are reduced, and they have an increased limit of proportionality and modulus of rupture. In other words, they have better precracking and strength characteristics.

On the negative side, they have very poor fire resistance properties and consequently the use of such materials is limited.

In recent years the adverse health effects of asbestos have become known, and in many countries there is now legislation preventing the use of asbestos. Formerly, one use of asbestos fibres was as a reinforcing agent in composite articles such as asbestos cement sheeting, once commonly used for the exterior surfaces of dwellings and other buildings.

Glass-fibre reinforced cement (G.R.C.) composite materials have been suggested as a replacement for the former asbestos-containing cement products.

Glass fibre reinforced Portland cement matrices, through the incorporation of fibres, provide a new material with high fracture toughness at high strength levels, a combination impossible to obtain with each individual material.

A strong matrix, and random dispersion of fibres in all directions in the matrix are desirable properties for a good fibre-reinforced cement product.

Improved glass fibre reinforced cement sheeting is one of the products which could be produced in accordance with the present invention.

Prior art G.R.C. production methods involve the wet mixing of cement, sand and water, to produce a wet matrix.

Thereafter, two methods of introducing glass fibres are shown. In the first method, the fibres are mixed with the matrix, using a mechanical mixer. The disadvantage of such a method is that the fibres suffer damage in the mixing process, caused either directly by the machinery acting on the fibres, or by the fibres being mixed in with a relatively stiff wet matrix mixture.

After mixing, the material is transported to a forming station, where it is poured into moulds. As a result of the pouring operation, the fibres are highly oriented in the matrix, with a corresponding large loss of desirable mechanical characteristics.

The second mixing method introduces fibres to the wet matric in a spraying process, which results in a spray of glass-fibre bearing wet matrix being applied to a former subsequent to which compaction and curing takes place.

There are many disadvantages of these prior art methods. Firstly, the wet mixing of the matrix often results in a less than total reaction of the cement and water. More importantly, the mixing of the fibres with the wet matrix causes fibre breakage. The resulting products as a result do not exhibit the desirable qualities (strong matrix and random dispersion of unbroken fibres) referred to earlier. In addition, the operation requires a skilled labour force, and it is limited economically to produce a tailor-made product.

It is an object of this invention to provide a composite article and a method and an apparatus for manufacturing such an article, which overcomes at least in part some of the aforementioned disadvantages.

The invention provides a process for the production of composite articles, including the steps of pre-mixing fibres and solid constituents, cement being one of said constituents, applying a fluid to the pre-mixture thus produced, the fluid being capable of reacting with the cement, and imparting vibration energy to said fluid-wetted mixture, said fluid-wetted mixture being placed under pressure during the application of said vibration energy, to mix said fibres and constituents and to facilitate the reaction of said fluid and said cement.

The invention also provides apparatus for the production of composite articles, including means for pre-mixing fibres and solid constituents, cement being one of said constituents, applying a fluid to the pre-mixture thus produced, the fluid being capable of reacting with the cement, means for imparting vibration energy to said fluid-wetted mixture, and means for placing said fluid-wetted mixture under pressure during the application of said vibration energy, to thereby mix said fibres and constituents and to facilitate the reaction of said fluid and said cement.

The invention still further provides apparatus for mixing by imparting vibration to a form upon which is located a fluid-wetted mixture of solid constituents for the production of a composite article, including a table, means for imparting vibration energy to said table, means for varying the frequency of said vibration energy, and means to apply pressure to said mixture whilst said vibration energy is being imparted.

The invention further provides a composite article formed from fibres and solid constituents, cement being one of said constituents, said constituents being pre-mixed and said fibres being substantially randomly oriented within said constituents being capable of reacting with the cement, vibration energy being applied to said fluid-wetted mixture, said fluid-wetted mixture being placed under pressure during the application of said vibration energy, to mix said fibres and constituents and to facilitate the reaction of said fluid and said cement.

An embodiment of the invention will be described in detail hereinafter with refrence to the accompanying drawings, in which:-

Figure 1 is a schematic view of a plant for producing G.R.C. sheet in accordance with the present invention;

Figure 2 is a radial section through a pre-mixing device forming part of the embodiment of the invention;

Figure 3 is an axial section through the pre-mixing device of Figure 2;

Figure 4 is a side elevation of the vibration mixer of the embodiment of the invention;

Figure 5 is a plan view of the mixer of Figure 4;

Figure 6 is an end elevation of the mixer of Figure 4;

Figure 7 is a side elevation of the press for use with the mixer of Figure 4; and

Figure 8 is an end view of the press of Figure 7.

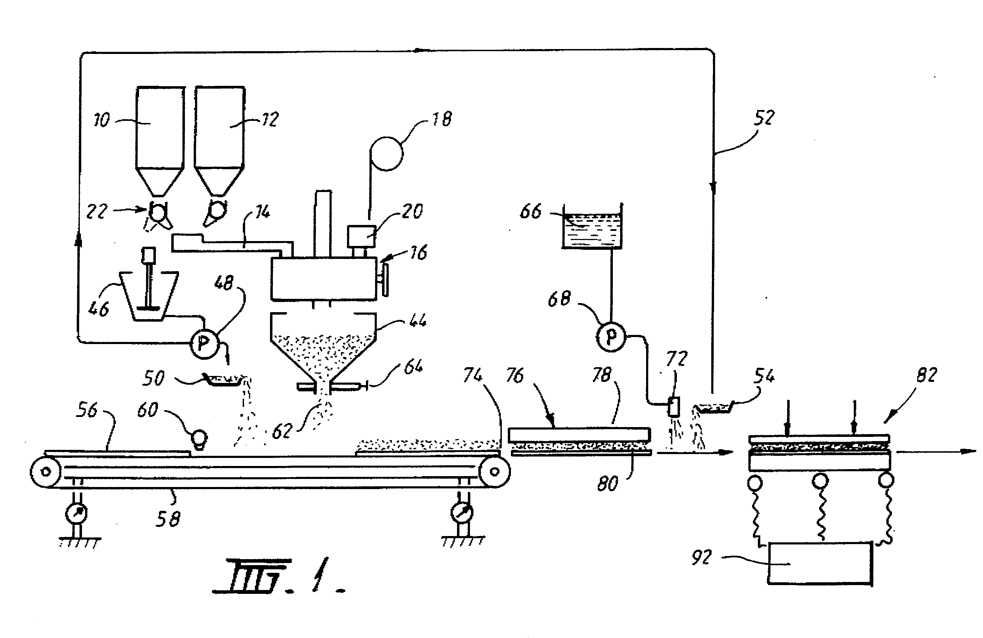

As indicated in the introduction to this specification, G.R.C. composite materials may be formed using sand or other aggregates, cement and alkali-resistant glass fibre. Figure 1 shows elements of a G.R.C. sheet plant for production of such sheets in accordance with the present invention.

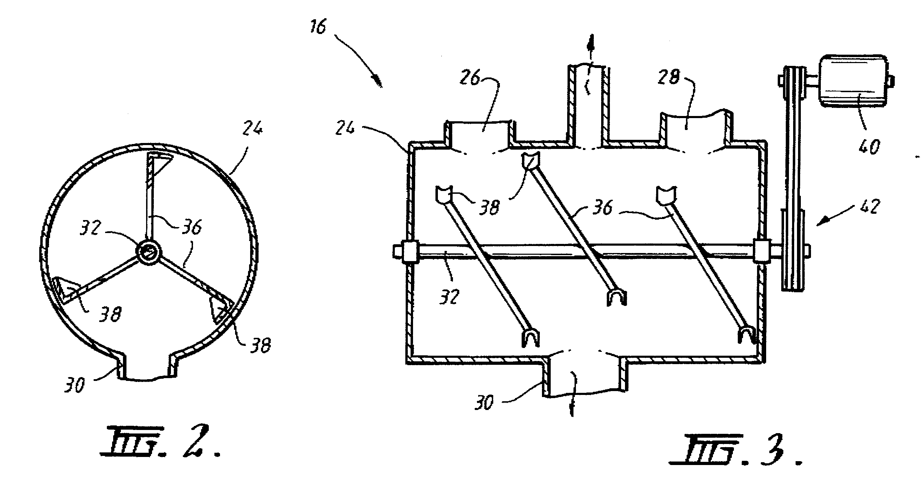

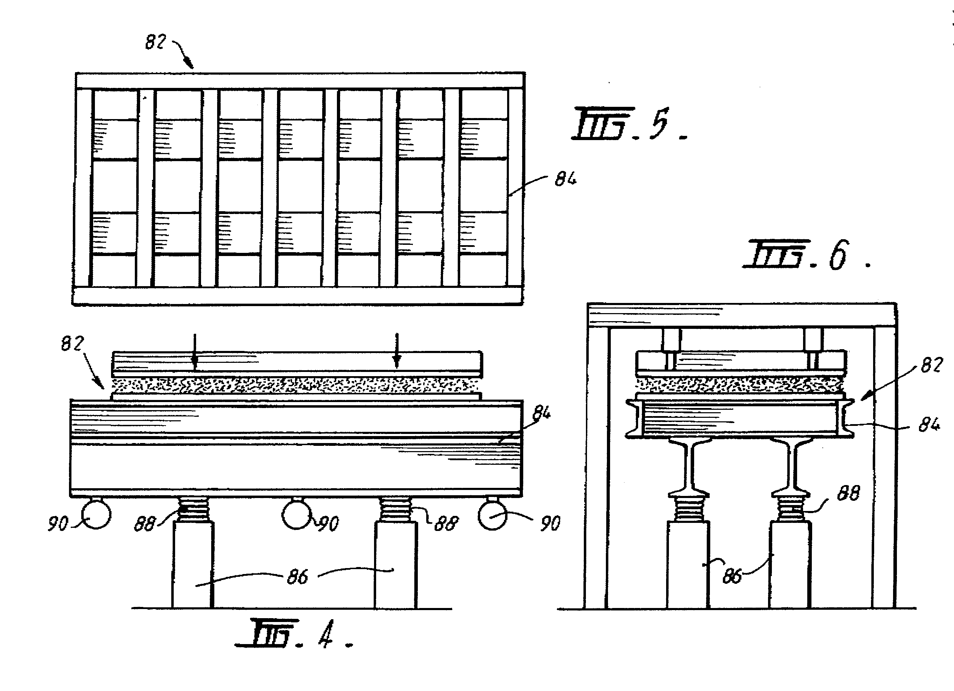

In Figure 1, there is a cement silo 10 and an aggregate silo 12, which dispense cement and aggregate, for example sand, respectively into a conveyor 14 which transports the constituent to a dry pre-mixing apparatus 16 (shown in more detail in Figures 2 and 3). The sand and cement may pass through weighing means 22 which are calibrated to deliver a predetermined ratio of constituents to conveyor 14.

Alkali-resistant glass fibre is dispensed from a reel 18 and is cut into sections having a predetermined length (in one example, lengths of approximately 20mm) in accordance with the parameters of the particular G.R.C. article to be produced.

The fibre is cut by a chopping device 20, and passes from there into pre-mixing apparatus 16. It would be possible to use other means to produce desired lengths of fibre, to use other fibres, and to use fibres in other forms. For example, a fibre mesh or meshes could be used.

Turning now to Figures 2 and 3, the pre-mixer 16 consists of a fixed horizontal cylinder 24 lined with a friction reducing material, which cylinder receives the materials (aggregate and cement) through openings therein. Preferably, openings 26, 28 are at the top of cylinder 24. The mixed materials are discharged through one or more openings 30, preferably located in the bottom, of the cylinder 24. All openings, for the entry and exit of the materials, are preferably provided with valves which are closed during the mixing process. An exhaust outlet 34 is provided for exhausting air, dust and the like when the cylinder 24 is being filled. On the axis of the cylinder a horizontal axle 32 is adapted to revolve inside cylinder 24. Arms 36 are attached to the axle 32 at an angle to a normal position. Preferably, the angle is in the vicinity of the range 20° to 30°, as shown in Figure 3. The arms 36 are also radially spaced, as shown in Figure 2. A motor 40 drives the axles 32, possibly by means of a pulley arrangement 42.

A spoon-like element 38 is attached to the end of each arm 36. The elements 38 act to scoop up the materials in the lower section of cylinder 24. When the elements 38 pass the topmost position, the materials fall from the elements 38 and become mixed during the fall which is not completely a 'free fall'; the arms 36 impart an additional horizontal component to the movement of the falling material.

With the mixing procedure described, the glass fibres are gently mixed in with the aggregate and cement, thus minimising fibre breakage, and maximising the random distribution of the fibres in the dry pre-mixture.

Once the material has been pre-mixed in the pre-mixing apparatus 16, it is discharged by gravity into a hopper 44.

Cement from cement silo 10 may also be supplied to a grout-mixing device 46 from which grout is supplied to a form by a grout pump 48 to a first grout feeding device 50, and through line 52 to a second grout feeding device 54, in the event that it is determined to add grout at a later stage in the process.

In the process of the embodiment, forms are used upon which material is deposited, and the G.R.C. article produced. These forms (one of which is shown at 56) are of sufficient strength to support the weight of material (and subsequently water) which is placed upon them. Although the form shown in Figure 1 is a flat, planar platform, in some embodiments it may be convenient to use a form with a boundary lip or surround defining some parameters of eventual product size. Thus, one may have a series of forms of different sizes to cater for different sizes of end products.

The forms 56 are re-usable, are preferably formed from steel, and are supplied cleaned to a weighing conveyor system 58, where prior to the deposit of pre-mixed material thereon, they are preferably oiled, using an oil applicator 60, and may have a grout layer applied by grout feeder 50 to provide a good finish to the sheet surface in contact with the form 56.

The weighing conveyor system 58 is of the type which may be calibrated to ensure that each form is supplied with a predetermined weight of pre-mixed material from hopper 44. That is done by the conveyor automatically adjusting its speed as material is deposited on a form 56. Thus, once parameters of the constituents of the finished product have been determined, parameters such as thickness, size and shape, these can be supplied to the conveyor control unit. As the pre-mixed material is deposited onto a form 56 by gravity discharge or another suitable means, the conveyor system 58 will ensure that the appropriate weight of material is deposited on each form.

The hopper 44 serves to provide a suitable quantity of pre-mixed material for the filling of the G.R.C. sheet forms 56 and the means 64 to regulate the quantity of material to be dispensed. A monitoring system ensures that the hopper is always filled from pre-mixer 16 to the same level to guarantee that the discharge 62 from the hopper's lower end is not affected by changing pressures due to varying heights of material in the hopper. It has been mentioned hereinbefore that it is important that the glass fibres be <u>randomly</u> oriented within the mixture of constituents. Thus, any means for depositing pre-mixed material onto a form 56, which allows for such random orientation, may be used.

A supply 66 of fluid, typically water, is connected to a water pump 68, which pumps water to water spraying or atomising means 72. The atomised water is preferably supplied under pressure from spray guns or the like. It should be noted that the fluid sprayed may include such constituents as accelerants or the like.

From the weighing conveyor system 58, the filled form 74 passes to a pre-compaction device 76. It should be noted that in practice, in a plant for producing G.R.C. sheet in accordance with the present embodiment of the invention, the forms 56 would be transported on a system which conveys them in a loop, broadly speaking. Details of the particular conveyors used to move the forms from one station to another will not be described, as such systems are well known and understood.

After the pre-mixed material has been placed on the form 74 it is in a very loose condition. Pre-compaction acts to level the material on the form and to remove air from the material before fluid is applied thereto in the vicinity of means 72, without disturbing the random arrangement of the glass fibres.

The pre-compaction process may be carried out by either a roller (compaction of a line) while the form 74 is in motion, or by means of a press (compaction of an area) while the form is stationary. If the compaction is carried out by means of a roller, it is essential to avoid shear forces acting on the material which could orientate the glass fibres.

Figure 1 shows a press arrangement 76, in which a press member 78 is applied to the top of the pre-mixture on the form 80 and force is then applied, by hydraulic means or by other suitable means, to compact the material. The force applied to the material may be varied in accordance with a predetermined thickness criterion.

The press member 78 is then raised and the form 80 transported to a wetting station, which may form part of a mixing station including vibration mixing device 82, to be described hereinafter, or may be in the vicinity thereof, as shown in Fig. 1. The addition of water produces the hydration of the cement in the substantially dry mixture. The amount of water added by means 72 is preferably such as to produce a water/cement factor of 0.3. The required quantity of water is preferably applied under pressure in an atomised condition, with the temperature of the water preferably at approximately 40° C. The addition of water in this form allows water particles to penetrate the pre-mixture, and causes the water to surround cement grains. This allows, in conjunction with the vibration mixing to be described hereinafter, an almost complete hydration of the cement, using a minimum of water.

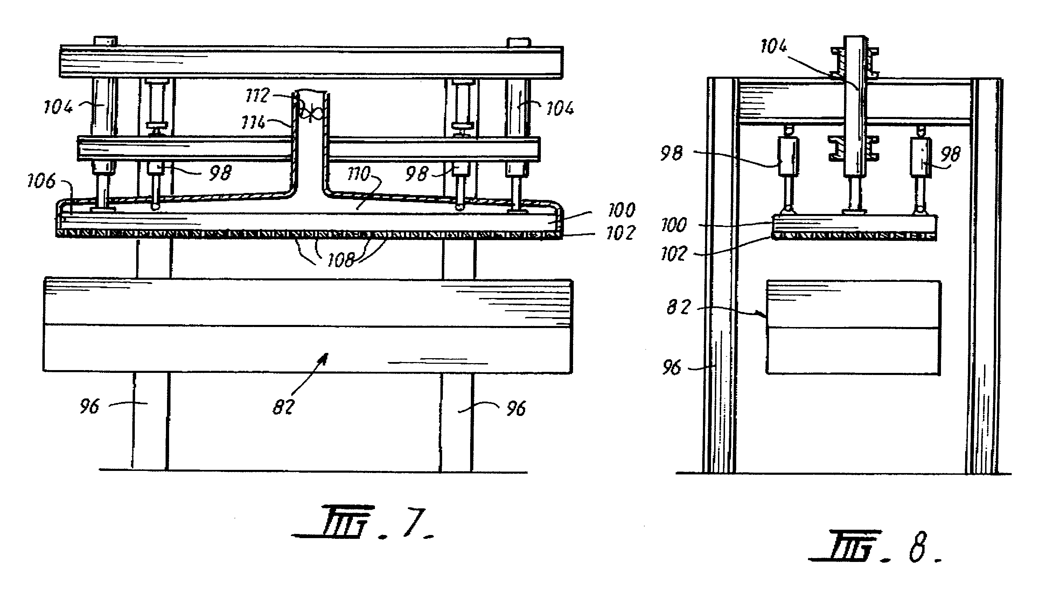

After the wetting of the pre-mixture, the filled form 80 is transported to the mixing device 82 (Figures 4, 5 and 6).

The mixing device 82 consists of a table 84 supported by supports 86, in between which elements are vibration dampers 88. Attached to the underside of table 84 are vibration-producing means 90 which may take the form of electric motors having an eccentric member located on an axle. The vibrators 90 are controlled by a variable-frequency converter (92 in Figure 1) which enables the frequency of vibration to be varied. Of course, other suitable alternative vibration-producing devices may be used.

Filled form 80 is clamped to table 84 during the vibration mixing, and a press is applied to the top surface of the wetted material as shown in Figures 4 and 6. The press, which is shown in more detail in Figures 7 and 8 may include (in the case of a planar form) a former which defines the lateral boundaries of the wetted mixture, and of the final G.R.C. sheet.

Turning now to Figures 7 and 8, the press 94 includes a frame 96, located on which are hydraulic cylinders 98 attached to the cover plate 102 thereon. Telescopic guide means 104 is provided to strictly control the limits of movement as the press member is moved up and down.

The vibration mixing takes place as follows. Once a form 80 upon which there is a wetted matrix is located on table 84, the form is clamped thereto, and optionally a former located thereon. Press 94 is actuated to bring cover plate 102 in contact with the upper surface of the wetted material. Such further pressure as is required may then be applied to the mixture.

The vibration mixing device has been calibrated such that optimum frequency ranges are determined for different sheet criteria, and for a particular sheet, a predetermined frequency value or range will be selected. It has been found that for particular circumstances, a particular range of frequencies will facilitate vibration mixing, in that the movement of at least some of the particles, in response to the vibration applied to the mixture, will allow the materials to be intimately mixed, blending the cement paste with the sand (in this case) and with the fibres, without altering the random distribution of the fibres. The vibration causes cement grains to shatter, allowing the water to come into contact with a greater area of cement, to facilitate hydration.

After the material has been mixed for a predetermined time - typically approximately 60 seconds - the cover plate 102 is lifted, and an optional final vibration may take place at a different, preferably lower, frequency, to even out any surface finishing irregularities which may occur as a result of the removal of plate 102.

As a result of vibration mixing, air trapped within the wetted pre-mixture is released. Normally, this results in blisters being formed on the upper surface of the mixture, and even the subsequent vibration at another frequency may not smooth out the surface.

Accordingly a hood 106 (shown only in Figure 7) may be provided over press member 100. Apertures 108 in cover plate 102 communicate between (in use) the top surface of the mixture and a chamber 110 in which a partial vacuum may be created by fan means 112 which acts to draw air from chamber 110 through duct 114 and exhaust it in the direction of the arrow. The partial vacuum in chamber 110 causes air brought to the surface of the chamber. In that way surface blister formation is minimised.

The form 80 with the fully processed mixture, in a plastic state, on it is then placed on a trolley capable of holding a number of such forms. The trolley is than taken to a curing station where the sheets are allowed to cure. Once the sheets have been cured, the forms are stripped of the sheets by a stripper machine. The G.R.C. sheets are placed on pallets for distribution, and the forms cleaned and returned to a position on the weighing conveyor 58, for re-use.

It can be seen that the present invention provides an improved process for producing G.R.C. sheets, improved sheets produced by said process, and to improved apparatus for carrying out said process.

**Claims**

1. A process for the production of composite articles from fibres (18) and solid constituents (10, 12), cement (10) being one of said constituents, characterized by the steps of pre-mixing (16) said fibres and solid constituents, applying a fluid (72) to the pre-mixture thus produced, the fluid (72) being capable of reacting with the cement (10), and imparting vibration energy (82) to said fluid-wetted mixture, said fluid-wetted mixture being placed under pressure during the application of said vibration energy, to mix said fibres (18) and solid constituents (10, 12) and to facilitate the reaction of said fluid and said cement.

2. A process according to claim 1, characterized in that said vibration energy (82) is applied in accordance with a predetermined frequency or range of frequencies.

3. A process according to claim 1 or 2, characterized in that said step of pre-mixing fibres and solid constituents is a dry pre-mixing step.

4. A process according to any preceding claim characterized in that said fluid (72) is applied to said mixture under pressure in an atomised state.

5. A process according to any preceding claim, characterized by the further step of supplying the dry pre-mixture to a form (56), and pre-compacting (76) the pre-mixture thereon.

6. A process according to any preceding claim, characterized in that the fibres are alkali-resistant glass fibres (18), the constituents are cement (10) and sand (12), and the fluid is water (66), wherein the vibration under pressure (82) mixes all components and facilitates hydration of the cement.

7. A process according to claim 5 or 6, characterized in that said form (56) is supplied with a layer of grout (50) prior to the deposit of dry pre-mixture thereon.

8. A process according to any preceding claim, characterized in that the dry pre-mixing step takes place in a mixing chamber (24) in which radial arms (36) located at an angle other than normal to a shaft (32) and provided with spoon-like means (38), act to impart some horizontal component to the movement of the elements of the pre-mixture falling under the influence of gravity.

9. A process according to any preceding claim, characterized in that after said pre-mixing step (16), the pre-mixed constituents are deposited on a form (56) in a manner to orient said fibres randomly within said solid constituents.

10. A composite article when produced by the process of any preceding claim.

11. Apparatus for the production of composite articles, from fibres (18) and solid constituents (10, 12), characterized by means (16) for pre-mixing said fibres (18) and solid constituents (10, 12), cement (10) being one of said solid constituents, applying a fluid (72) to the pre-mixture thus produced, the fluid (72) being capable of reacting with the cement (10), means (82) for imparting vibration energy to said fluid-wetted mixture, and means (100) for placing said fluid-wetted mixture under pressure during the application of said vibration energy, to thereby mix said fibres and constituents and to facilitate the reaction of said fluid and said cement.

12. Apparatus according to claim 11, characterized in that said vibration energy is applied in accordance with a predetermined frequency or range of frequencies.

13. Apparatus according to claim 11, characterized in that said fibres (18) are glass fibres, sand (12) being another of said solid constituents, and said fluid is water (72), said mixing by means of vibration under pressure also facilitating the hydration of said cement.

14. Apparatus for mixing by imparting vibration to a form (56) upon which is located a fluid-wetted mixture of solid constituents (18, 10, 12) for the production of a composite article, characterized by a table (82), means (90) for imparting vibration energy to said table, means (92) for varying the frequency of said vibration energy, and means (100) to apply pressure to said mixture whilst said vibration energy is being imparted.

15. Apparatus according to claim 14, characterized in that the form is clamped to said table whilst said vibration energy is being imparted.

16. A composite article formed from fibres (18) and solid constituents (10, 12), cement (10) being one of said solid constituents, characterized by said constituents being pre-mixed (16) and said fibres being substantially randomly oriented within said constituents, a fluid (72) being applied to the pre-mixture thus produced, the fluid (72) being capable of reacting with the cement (10), vibration energy (82) being applied to said fluid-wetted mixture, said fluid-wetted mixture being placed under pressure (100) during the application of said vibration energy, to mix said fibres and constituents and to facilitate the reaction of said fluid and said cement.

0258171

FIG. 1.

0258171

FIG. 3.

FIG. 2.

0258171

0258171

Fig. 8.

Fig. 7.